# EUROPEAN PATENT APPLICATION

(11) **EP 1 225 450 A1**
(43) Date of publication of application: **24.07.2002**
(21) Application number: 01300007.0
(22) Date of filing: 02.01.2001
(51) Int. Cl.: G01N 35/10, B65D 23/10, B65D 25/28

(54) **Reagent dispensing or filling apparatus and holder**

(71) Applicant: Randox Laboratories Ltd., Crumlin, Co. Antrim BT29 4QY (GB)
(72) Inventor: Lawson, John Colin, c/o Randox Laboratories Ltd., Crumlin, Co. Antrim BT29 4QY (GB); Fitzgerald, Stephen Peter, c/o Randox Lab. Ltd., Crumlin, Co. Antrim BT29 4QY (GB)
(74) Representative: Skone James, Robert Edmund

(57) **Abstract**

Reagent dispensing or filling apparatus comprises a reagent holding device (1) having a plurality of reagent holder locations (6) in each of which a reagent holder (8) can be located in use. The reagent holding device (1) is movable to bring each reagent holder location (6) into alignment with a loading/unloading position (11). A reagent dispensing or filling system has at least one probe (20) mounted to a control device (22) which can move the probe into any one of a number of reagent holders independently of the position of the reagent holding device (1).

## Description

The invention relates to apparatus for dispensing reagent, reagent filling apparatus and apparatus for dispensing and filling reagent, for example for use in an assay instrument. It also relates to a reagent holder.

The performance of assays on test samples is frequently automated and in a typical assay process, a reagent such as a conjugate or assay buffer having a small volume, typically 47-84µl is added to a test sample via a probe.

In order to achieve this automatically, a variety of reagent loaders have been designed, each of which stores a number of different reagents in use which can then be extracted using a suitable probe. In some cases, the reagents have been held on a rotating carousel arrangement. The reagent bottles are typically of a wedge shaped design and are loaded onto a circular tray. When a reagent is required, the tray is rotated to bring the appropriate bottle into alignment with a sampling probe which is then moved downward into the bottle to allow the reagent to be extracted.

There are a number of drawbacks in this design including the fact that the machine must cease operation when a new bottle is loaded so increasing downtime. This is because a single loading/unloading position is provided so as to minimise risks of contamination and the like.

In addition, the machine has to wait for the correct bottle to be in position before sampling can take place so increasing the processing time for a sample.

In accordance with one aspect of the present invention, reagent dispensing or filling apparatus comprises a reagent holding device having a plurality of reagent holder locations in each of which a reagent holder can be located in use, the reagent holding device being movable to bring each reagent holder location into alignment with a loading/unloading position; and a reagent dispensing or filling system having at least one probe mounted to a control device which can move the or each probe into or into alignment with any one of a number of reagent holders independently of the position of the reagent holding device.

We have designed a much more flexible apparatus in which the probe can be moved to a plurality of probe sampling or filling positions. Typically, the probe can be moved into all but the reagent holder at the loading/unloading position. This maximises the flexibility of the apparatus. In addition, the reagent holding device only has to be moved when a new reagent holder has to be loaded or when the reagent holder at the loading/unloading position is required. In the latter case, the reagent holding device only has to be moved sufficiently to bring the reagent holder to the nearest probe sampling position.

Overall, the invention eliminates the problems set out above by allowing substantially fully random access to all the reagent holders all of the time. This achieves faster sample processing speeds and more flexibility with the type of tests that can be run without a change in the machine set up.

The reagent holding device could be arranged to move linearly but this takes up significant space. Preferably, therefore, the reagent holding device is in the form of a carousel which is mounted for cyclic movement, e.g. rotation, along an elliptical, circular or other closed path.

The reagent holders could be inserted into the respective locations from above or below but again this increases the space requirements and limits the time during which access can be made. Preferably, therefore, each reagent holder location has an outwardly facing opening through which a reagent holder can be inserted or extracted at the loading/unloading position.

Preferably, the probe is adapted to be inserted from above into each reagent holder. The probe may also be provided with liquid level sensors (for example a capacitive sensor) to monitor the amount of liquid reagent in the holder.

The control means can take a variety of forms but is conveniently in the form of a robotic arm.

The apparatus is particularly suited for use in an assay instrument, for example of the type described in EP-A-0994355.

Although the invention is primarily concerned with dispensing apparatus, it could also be used for filling apparatus or even combined dispensing and filling apparatus.

In accordance with a second aspect of the present invention, a reagent holder has a generally wedge shape in plan view, the holder having an access opening at its narrow end.

The advantage of this type of reagent holder or bottle is that it allows the holder openings from a number of holders to be grouped into the central region of a carousel, for example a reagent holding device of apparatus according to the first aspect of the invention. This minimises the distance between access openings. In some cases, this new holder can also reduce the area over which the probe must traverse and limits the dispense/aspiration equipment size and that of the overall system, and also helps to minimise the time taken by the aspiration (or dispense) probes to move between the reagent loader and other dispense, aspiration or probe wash positions.

Preferably, the base of the holder slopes downwardly when the holder is located in a reagent holder location of a reagent dispensing or filling apparatus. This allows removal of virtually all the contents of the holder when resting on a similarly sloped floor.

The wide end of the holder may be shaped in various ways to help its removal and/or lifting from the reagent loader. For example, a recess may be provided in the upper surface of the holder to allow a thumb or finger to pull the holder from the holding device. Alternatively, or additionally, "step" recesses may be provided both top and bottom to allow gripping.

Conveniently, the holder is provided with a screw on or other sealing top whose size and/or shape prevents the holder from being loaded into an assay instrument without removal of the top.

Some examples of reagent dispensing apparatus and reagent holders according to the present invention will now be described with reference to the accompanying drawings, in which:-
Figure 1 is a perspective view of an example of a reagent dispensing apparatus with some parts omitted for clarity;
Figure 2 is a perspective view of the carousel arrangement of Figure 1 from above and in front and with a module cover in place;
Figure 3 is a view similar to Figure 2 but from the rear;
Figure 4 is a cross-section through Figure 3;
Figure 5 is a view similar to Figure 2 but also showing a probe arrangement and with some other parts omitted for clarity;
Figure 6 is a perspective view of a reagent bottle;
Figures 7A and 7B are a plan and cross-section respectively of the bottle shown in Figure 4;
Figures 8A-8C are a perspective view, plan, and section on A-A in Figure 8B respectively of a second example of a reagent bottle;
Figure 9 illustrates a carousel loaded with bottles of the type shown in Figure 7; and,
Figure 10 is a schematic view of part of an assay instrument.

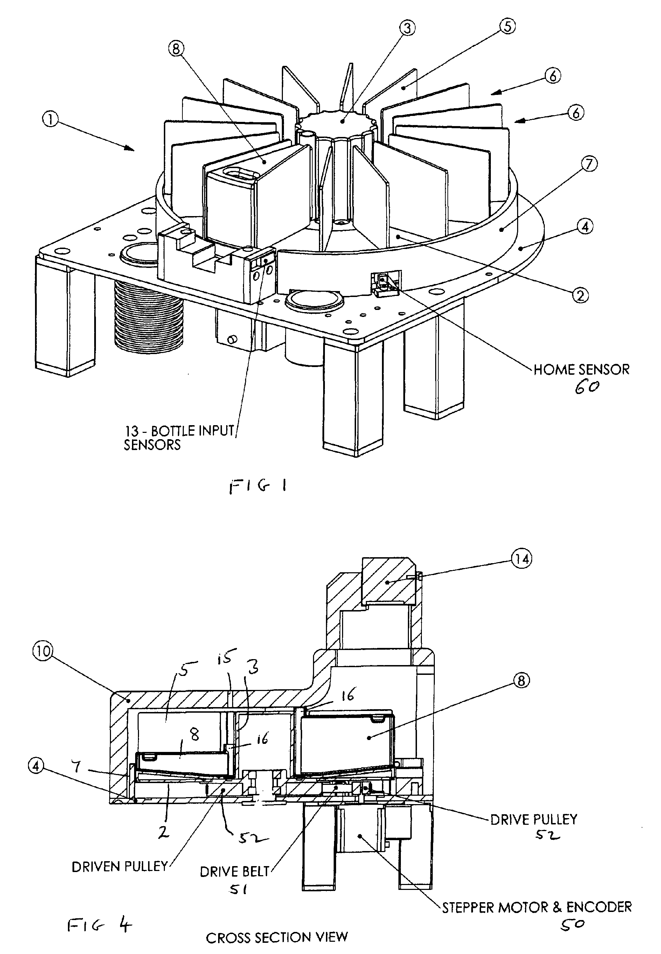

The apparatus shown in Figures 1 to 5 comprises a rotatably mounted carousel 1 comprising a tray 2 coupled to a hub 3 rotatably mounted on a base 4. A set of radially extending plates 5 rest on the tray 2 and extend radially outwardly to the perimeter of the tray 2 and define respective reagent bottle locations 6 between them. Only some of the plates 5 and locations 6 are indicated in Figure 1. A fixed locating ring 7 is supported on the base 4 and extends around the perimeter of the tray 2 to prevent bottles 8 in the location 6 from moving radially outwardly.

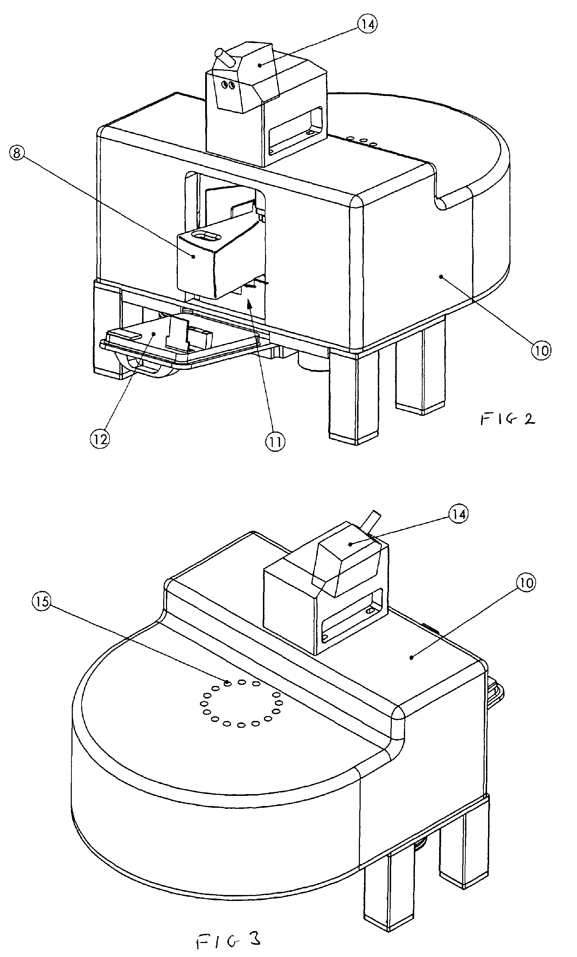

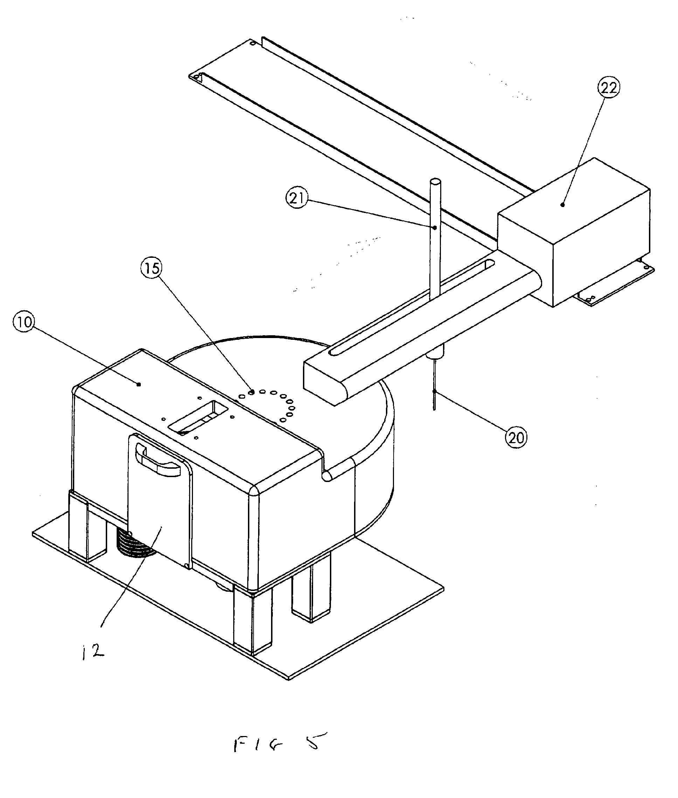

As can be seen in Figures 2 and 3, the components so far described in Figure 1 are located in a housing or module 10 having an opening 11 defining an unloading/loading position which is closed by a door 12. An interlock (not shown) ensures that an operator cannot access bottles when the carousel is rotating. A visual or other indicator may be provided to show the operator that access to the holding device is possible for loading or unloading.

A scanner 14 is mounted above the unloading/loading position so as to be able to read a bar code on the upper surface of a bottle 8 as it is inserted into the carousel.

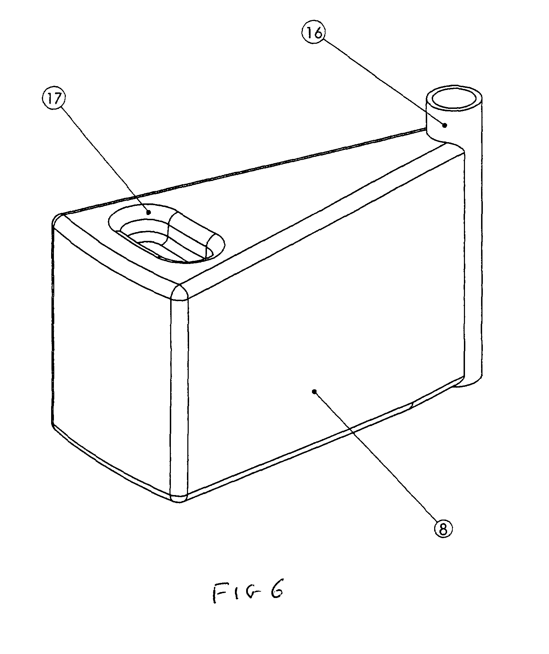

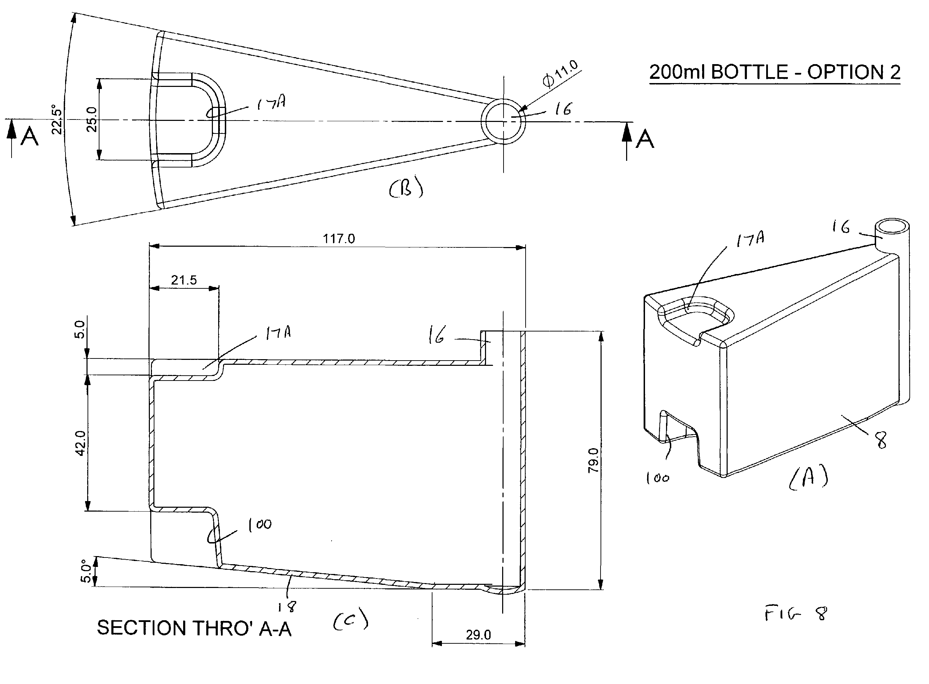

Figure 3 illustrates a set of fifteen apertures 15 arranged in a circle, each aperture being aligned with a respective reagent bottle location 6 at its radially inner end. When a bottle 8 is inserted into a location 6 its radially inner nozzle 16 (Figures 6 and 7) is aligned with an aperture 15 (Figure 4 which shows different size bottles 8).

Each bottle 8 has a wedge form as can be seen in Figures 6 and 7 with a recess 17 and an angled floor 18 (Figure 7B) to ensure that liquid flows radially inwardly and can thus be extracted by the probe. The purpose of the recess 17 is to provide a means by which the bottle may be gripped between the thumb at the top and other fingers underneath the base of the bottle.

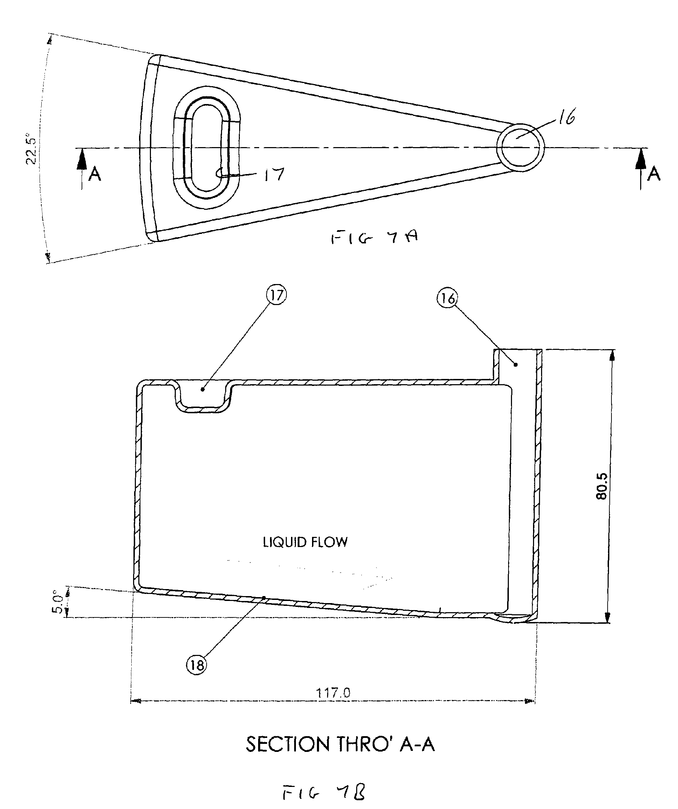

Finally, a probe 20 (Figure 5) coupled to a flexible tube 21 is supported on a robotically controlled arm 22 for movement in any one or more of three mutually orthogonal directions to bring it into alignment with, and to insert it into, a chosen aperture 15.

In use, the reagents are cooled via cold air ducted into the chamber formed by the module 10 from a machine cooler unit. Spills and condensation are channelled to a hose fitting on the base plate (not shown) and piped to the machine waste system.

A stepper motor 50 (Figure 4) controls the rotation of the carousel 1 via a drive belt 51 and pulleys 52 and an encoder records its position. A sensor 60 (Figure 1) on the base plate 4 establishes the home position for the carousel 1. The electrical leads exit through the base plate 4 via mounted plugs (not shown).

At start-up, the bottles 8 are loaded into the carousel 1 from the front of the machine through the opening 11, the carousel being operated to bring each location 6 into alignment with the opening 11. On loading, each bottle 8 has its bar code read via the scanner 14, the information being fed to a microprocessor (not shown) which also controls operation of the overall system. Thus, the microprocessor knows what type of reagent is in each of the sixteen positions and by virtue of the encoder and the optical sensor, can monitor the position of each of the sixteen reagents as the carousel rotates.

Reagents can be sampled from each of the fifteen different positions by the reagent probe 20 through the holes 15. Potentially, therefore, there is access to a maximum of 15 different reagents or up to fifteen bottles of the same reagent, depending on what tests are being carried out. Also, the machine does not need to stop sampling reagents when a new bottle is being loaded. If several bottles of the same reagent are loaded then the machine will finish sampling from one before moving on to another. The microprocessor will indicate when a bottle change is needed such as when a bottle is empty, if reagent is "out of date" or if a reagent is required that has not been loaded.

When a bottle changeover is required, the stepper motor will rotate the carousel 1 to bring the empty bottle to the loading/unloading position at the next appropriate time in the machine's cycle. Once positioned, the operator can open the door 12, remove the empty bottle 8, and push the new one into place. Sensors 13 at the input position ensure that the bottle has been correctly loaded into the carousel. If the bottle is not fully in position then the sensors are blocked, and no message will be displayed, and the carousel will not rotate. Sampling, however, can continue while the door is open.

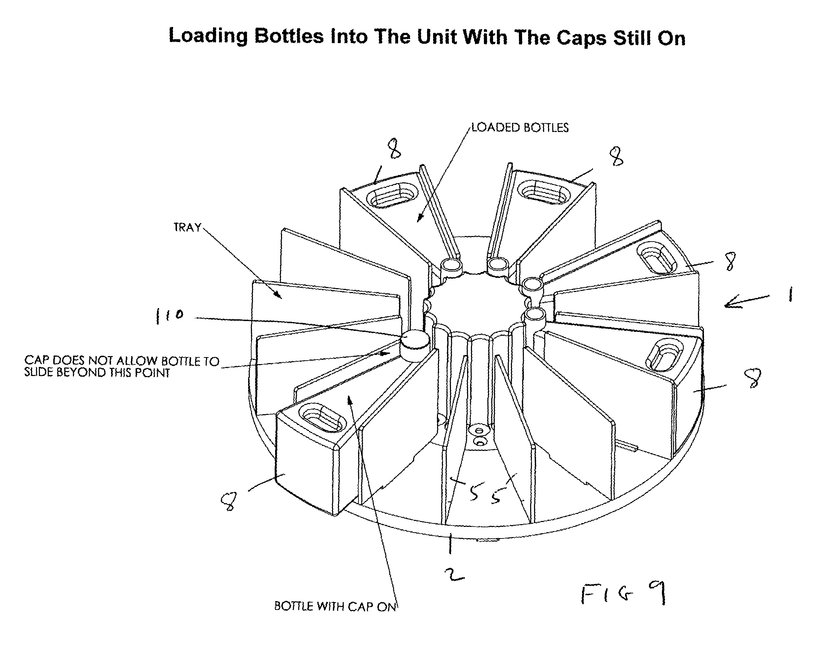

Figures 8A-8C illustrate a modified form of the bottle shown in Figure 7. In this case, the bottle is the same as that shown in Figure 7 except that the recess 17 has been modified as shown at 17A to provide an open ended slot while a further recess 100 is located in the base of the bottle. This allows the operator to grip the bottle with his thumb and finger in the respective recesses 17A,100.

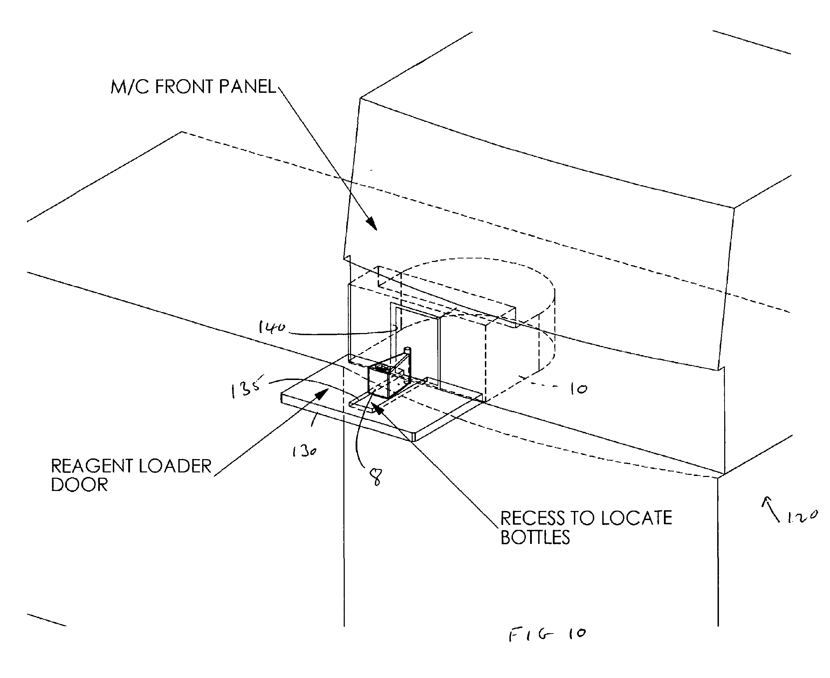

Figure 9 illustrates the carousel 1 supporting a number of bottles of the type shown in Figure 7. In this case, each nozzle 16 of the bottles 8 is initially closed by a screw on or otherwise fixed cap 110, one of which is shown in Figure 9. While the cap 110 is in position, it is not possible fully to locate the bottle 8 on the carousel 1. The reason for this is that the width of the cap is chosen such that it cannot pass through the vertex formed by adjacent plates 5. In an alternative (not shown), a restricting width at bottle neck level could be provided at the entrance to the loader.

Figure 10 illustrates part of an assay instrument 120 within which a carousel 1 of the type described above is located. The carousel housing is shown in dashed lines in Figure 10. In order to assist loading of a bottle 8, an entrance door 130 is hinged to the apparatus 120 so that when open, it lies horizontal. A recess 135 is provided on the inner surface of the door 130 in to which a bottle 8 can be located by the operator and then slid forwardly through an entrance opening 140 on to the carousel.

## Claims

1. Reagent dispensing or filling apparatus comprising a reagent holding device having a plurality of reagent holder locations in each of which a reagent holder can be located in use, the reagent holding device being movable to bring each reagent holder location into alignment with a loading/unloading position; and a reagent dispensing or filling system having at least one probe mounted to a control device which can move the or each probe into or into alignment with any one of a number of reagent holders independently of the position of the reagent holding device.

2. Apparatus according to claim 1, wherein the reagent holding device is rotatably mounted, the reagent holder locations being circumferentially spaced about the axis of rotation.

3. Apparatus according to claim 2, wherein each reagent holder location has a radially outwardly facing opening through which a holder can be inserted/extracted at the loading/unloading position.

4. Apparatus according to any of the preceding claims, wherein the probe is adapted to be inserted from above into each reagent holder.

5. Apparatus according to any of the preceding claims, wherein the control means comprises a robotic arm.

6. Apparatus according to claim 5, wherein the robotic arm is capable of moving the probe in one or more of three mutually orthogonal directions.

7. An assay instrument having a plurality of modules for carrying out respective operations on a test sample, one of the modules comprising reagent dispensing or filling apparatus according to any of the preceding claims.

8. A reagent holder having a generally wedge shape in plan view, the holder having an access opening at its narrow end.

9. A holder according to claim 8, wherein the base of the holder slopes downwardly when the holder is located in a reagent holder location of a reagent dispensing or filling apparatus.

10. A holder according to claim 8 or claim9, wherein the wide end of the holder is shaped to allow it to be gripped.

11. A holder according to claim 10, wherein a recess is provided in one or both of the upper and lower surfaces of the holder at its wide end.

12. Apparatus according to any of claims 1 to 7, the apparatus including a holder according to any of claims 8 to 11 in a reagent holder location.
